(19) Europäisches Patentamt

European Patent Office

Office européen des brevets

(11) **EP 3 647 159 A1**

(12) **EUROPEAN PATENT APPLICATION**

(43) Date of publication:
**06.05.2020 Bulletin 2020/19**

(21) Application number: **19205636.4**

(22) Date of filing: **28.10.2019**

(51) Int Cl.:
**B62D 6/00** *(2006.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.10.2018 JP 2018204100**

(71) Applicant: **JTEKT CORPORATION
Osaka-shi
Osaka 542-8502 (JP)**

(72) Inventor: **KODERA, Takashi
Osaka-shi,, Osaka 542-8502 (JP)**

(74) Representative: **Winter, Brandl, Fürniss, Hübner,
Röss, Kaiser, Polte - Partnerschaft mbB
Patent- und Rechtsanwaltskanzlei
Alois-Steinecker-Strasse 22
85354 Freising (DE)**

(54) **STEERING CONTROL DEVICE**

(57) Provided is a steering control device capable of applying an appropriate steering reaction force when turning of steered wheels in at least one direction is restricted. A steering-side control unit (61) includes a steering force component calculation unit (72) that calculates a steering force component (Tst), a reaction force component calculation unit (73) that calculates a reaction force component (Fir), a target steering angle calculation unit (74) that calculates a target steering angle (θh*) based on the steering force component (Tst) and the reaction force component (Fir), and a target reaction force torque calculation unit (75) that calculates a target reaction force torque (Ts*) through execution of angle feedback control that makes the steering angle (0h) follow the target steering angle (θh*). The reaction force component calculation unit (73) includes an end reaction force calculation unit that calculates an end reaction force, and an obstacle contact reaction force calculation unit that calculates an obstacle contact reaction force. When at least one of the end reaction force and the obstacle contact reaction force exceeds a prescribed reaction force, the steering force component calculation unit (72) reduces an absolute value of the steering force component (Tst).

FIG. 2

**Description**

BACKGROUND OF THE INVENTION

1. Field of the Invention

The present invention relates to a steering control device.

2. Description of Related Art

A steer-by-wire steering system is a type of steering system in which power transmission is disconnected between a steering unit steered by the driver and a turning unit that turns steered wheels in accordance with steering by the driver. With this type of steering system, a road surface reaction force and so on received by steered wheel are not mechanically transmitted to a steering wheel. Therefore, some steering control devices that control this type of steering system are configured to calculate a target reaction force torque based on a force in the same direction as a steering torque input by the driver (steering force component) and a force in the opposite direction to the steering torque (reaction force component), and control the operation of a steering-side motor such that a steering reaction force based on the target reaction force is applied.

The steering reaction force that is applied to the steering wheel may be obtained by approximately simulating a steering reaction force received by the driver when steering a steering system such as an electric power steering system (EPS) in which an assist force for assisting the driver in steering is applied. For example, Japanese Unexamined Patent Application Publication No. 2017-165219 (JP 2017-165219 A) discloses a steering control device that calculates a steering force component by adding a steering torque and an additional torque for simulating an assist force corresponding to the steering torque, and calculates a reaction force component by adding an axial force applied to a rack shaft and an end reaction force that reduces the impact generated when so-called end abutment occurs, that is, when an end of the rack shaft (rack end) comes into contact with a rack housing. Further, the steering control device calculates a steering angle (target steering angle) in the case where a force obtained by subtracting the reaction force component from the steering force component is input to an ideal model (steering model) of a steering system.

Then, to make the actual steering angle follow the target steering angle, the steering control device calculates a target reaction force torque through execution of angle feedback control, and controls the operation such that a steering-side motor outputs the target reaction force torque. Note that the end reaction force is applied when a target turning corresponding angle exceeds a steering angle threshold that is set in advance.

Assume that, with the steering control device of JP 2017-165219 A, the driver tries to further turn the steering wheel when an end reaction force is applied. In this case, the reaction force component rapidly increases as the end reaction force is added. Meanwhile, the steering force component also increases as the steering torque increases due to the turning operation, and as the additional torque increases with the increase in steering torque. Therefore, even when the reaction force component increases as the end reaction force is added, the target reaction force torque is prevented from increasing because the steering force component increases. Consequently, an appropriate steering reaction force is not applied, so that the steering wheel may be rotated in the direction of the turning operation even when an end reaction force is applied.

On the other hand, in a steering system such as an EPS in which a steering wheel (steering unit) and steered wheels (turning unit) are mechanically coupled, when the rack end comes into contact with the rack housing, movement of the rack shaft is physically restricted. Therefore, even if the driver tries to further turn the steering wheel when the rack end is in contact with the rack housing, the steering wheel is not rotated in the direction of the turning operation, so that steering is reliably restricted.

In this manner, with the related-art configuration described above, unlike the case of steering a steering system in which a steering unit and a turning unit are mechanically coupled, the steering reaction force that restricts steering is not appropriately applied. In this regard, there is room for improvement.

Note that the phenomenon described above occurs not only upon applying an end reaction force, but also upon applying a restriction reaction force for restricting steering when turning of the steered wheels in at least one direction is restricted, such as when a steered wheel is turned and brought into contact with an obstacle.

SUMMARY OF THE INVENTION

An object of the present invention is to provide a steering control device capable of applying an appropriate steering reaction force when turning of steered wheels in at least one direction is restricted.

According to an aspect of the present invention, there is provided a steering control device that controls a steering system configured such that power transmission is disconnected between a steering unit and a turning unit that turns steered wheels in accordance with a steering force input to the steering unit, the steering control device including: a steering-side control unit that controls an operation of a steering-side motor that applies a steering reaction force, the steering reaction force being a force against the steering force input to the steering unit; wherein:

the steering-side control unit includes a steering force component calculation unit that calculates a steering force component that is a force applied in a same direction as a steering torque input to the steering system, and a reaction force component calculation unit that calculates a reaction force component that is a force applied to the steering system in an opposite direction to the steering torque; the steering-side control unit calculates a target reaction force torque representing a target value of the steering reaction force, based on the steering force component and the reaction force component; the reaction force component calculation unit includes a restriction reaction force calculation unit that calculates a restriction reaction force for restricting steering that turns the steered wheels in at least one direction when turning of the steered wheels in at least one direction is restricted; and when turning of the steered wheels in at least one direction is restricted, the steering force component calculation unit makes an absolute value of the steering force component smaller compared to when turning of the steered wheels is not restricted.

According to the above configuration, when turning of the steered wheels in at least one direction is restricted, the absolute value of the steering force component is reduced. Therefore, it is possible to suppress that the steering force component hinders an increase in target reaction force torque in response to an increase in the reaction force component. Accordingly, when turning of the steered wheels in at least one direction is restricted, it is possible to reliably restrict steering by applying an appropriate steering reaction force.

According to another aspect of the present invention, in the steering control device of the above aspect, the steering force component calculation unit may include an additional torque calculation unit that calculates an additional torque applied in the same direction based on the steering torque; and the additional torque calculation unit may set an absolute value of the additional torque to zero when steering of the steered wheels in at least one direction is restricted. According to the above configuration, when turning of the steered wheels in at least one direction is restricted, it is possible to appropriately minimize an increase in steering force component.

According to still another aspect of the present invention, in the steering control device of the above aspect, the restriction reaction force calculation unit may include an end reaction force calculation unit that calculates an end reaction force as the restriction reaction force when a steering angle of a steering wheel coupled to the steering unit exceeds a steering angle threshold specified for the steering system.

According to still another aspect of the present invention, in the steering control device of the above aspect, the restriction reaction force calculation unit may include an obstacle contact reaction force calculation unit that calculates an obstacle contact reaction force as the restriction reaction force when at least one of the steered wheels is turned and brought into contact with an obstacle.

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG. 1 is a schematic configuration diagram of a steer-by-wire steering system according to a first embodiment;
FIG. 2 is a block diagram of a steering control device according to the first embodiment;
FIG. 3 is a block diagram of a steering force component calculation unit according to the first embodiment;
FIG. 4 is a block diagram of a reaction force component calculation unit according to the first embodiment;
FIG. 5 is a block diagram of an obstacle contact reaction force calculation unit according to the first embodiment;
FIG. 6 is a block diagram of a steering control device according to a second embodiment; and
FIG. 7 is a schematic configuration diagram of a steer-by-wire steering system according to a modification.

DETAILED DESCRIPTION OF EMBODIMENTS

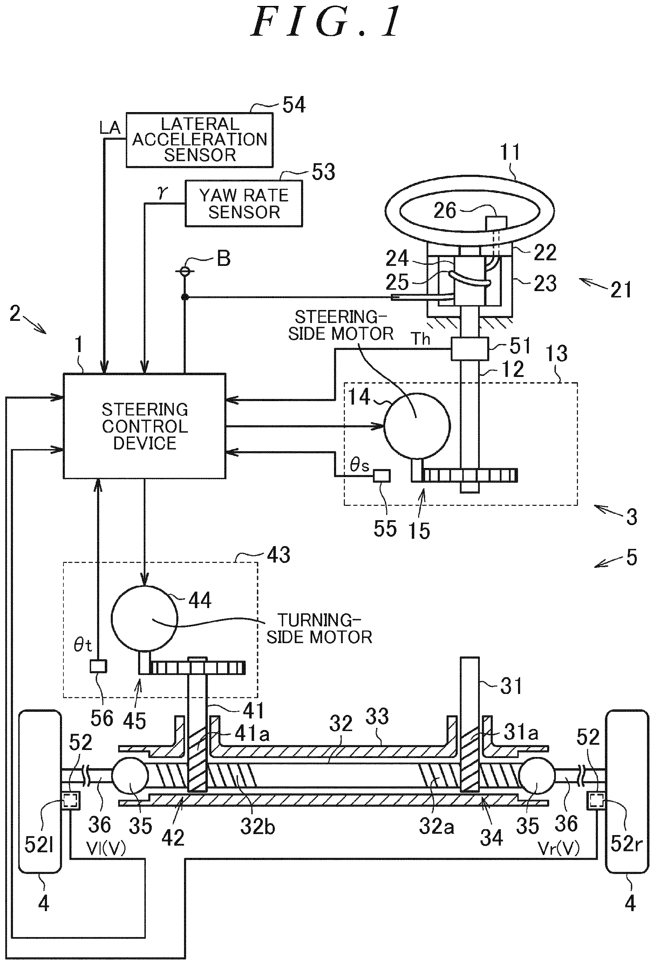

Hereinafter, a steering control device according to a first embodiment will be described with reference to the drawings. As illustrated in FIG. 1, a steer-by-wire steering system 2 controlled by a steering control device 1 includes a steering unit 3 that is steered by a driver, and a turning unit 5 that turns steered wheels 4 in accordance with steering of the steering unit 3 by the driver.

The steering unit 3 includes a steering shaft 12 to which a steering wheel 11 is fixed, and a steering-side actuator 13 capable of applying a steering reaction force to the steering shaft 12. The steering-side actuator 13 includes a steering-side motor 14 serving as a drive source, and a steering-side reducer 15 that transmits rotation of the steering-side motor 14 to the steering shaft 12 at a reduced speed. The steering-side motor 14 of the present embodiment is, for example, a three-phase brushless motor.

A spiral cable device 21 is coupled to the steering wheel 11. The spiral cable device 21 includes a first housing 22 fixed to the steering wheel 11, a second housing 23 fixed to a vehicle body, a tubular member 24 fixed to the second housing 23 and housed in a space defined by the first and second housings 22 and 23, and a spiral cable 25 wound around the tubular member 24. The steering shaft 12 is inserted through the tubular member 24. The spiral cable 25 is an electric wire connecting a horn 26 fixed to the steering wheel 11 and an in-vehicle battery B and so on fixed to the vehicle body. The length of the spiral cable 25 is sufficiently longer than a distance between the horn 26 and the in-vehicle battery B so as to supply electric power to the horn 26 while allowing the steering wheel 11 to rotate within the range corresponding to that length.

The turning unit 5 includes a first pinion shaft 31 serving as a rotary shaft whose rotation angle can be converted into a steered angle of the steered wheels 4, a rack shaft 32 serving as a steered shaft coupled to the first pinion shaft 31, a rack housing 33 reciprocally accommodating the rack shaft 32, and a first rack-and-pinion mechanism 34 that converts rotation of the first pinion shaft 31 into reciprocating motion of the rack shaft 32. The first pinion shaft 31 and the rack shaft 32 are arranged at a prescribed crossing angle. First pinion teeth 31a formed on the first pinion shaft 31 and first rack teeth 32a formed on the rack shaft 32 mesh with each other, thereby forming the first rack-and-pinion mechanism 34. Note that the rack shaft 32 is reciprocally supported at an axial end thereof by the first rack-and-pinion mechanism 34. A tie rod 36 is coupled to each end of the rack shaft 32 via a rack end 35 including a ball joint. A distal end of the tie rod 36 is coupled to a knuckle (not illustrated) to which the steered wheel 4 is attached.

The turning unit 5 further includes a second pinion shaft 41, a second rack-and-pinion mechanism 42 that converts rotation of the second pinion shaft 41 into reciprocating motion of the rack shaft 32, and a turning-side actuator 43 that applies a turning force for turning the steered wheels 4 to the rack shaft 32 via the second pinion shaft 41. The turning-side actuator 43 includes a turning-side motor 44 serving as a drive source, and a turning-side reducer 45 that transmits rotation of the turning-side motor 44 to the second pinion shaft 41. The second pinion shaft 41 and the rack shaft 32 are arranged at a prescribed crossing angle. Second pinion teeth 41a formed on the second pinion shaft 41 and second rack teeth 32b formed on the rack shaft 32 mesh with each other, thereby forming the second rack-and-pinion mechanism 42. Note that the rack shaft 32 is reciprocally supported at another axial end thereof by the second rack-and-pinion mechanism 42. The turning-side motor 44 of the present embodiment is, for example, a three-phase brushless motor.

In the steering system 2 having the configuration described above, the second pinion shaft 41 is rotated by the turning-side actuator 43 in accordance with a steering operation by the driver. The rotation is converted into an axial movement of the rack shaft 32 by the second rack-and-pinion mechanism 42, so that the steered angle of the steered wheels 4 is changed. Meanwhile, the steering-side actuator 13 applies a steering reaction force against steering by the driver to the steering wheel 11.

Hereinafter, the electrical configuration of the present embodiment will be described. The steering control device 1 is connected to the steering-side actuator 13 (steering-side motor 14) and the turning-side actuator 43 (turning-side motor 44), and controls the operations of these elements. Note that the steering control device 1 includes a central processing unit (CPU) and a memory (neither illustrated), and executes a program at prescribed calculation intervals. In this way, various types of control operations are executed.

A torque sensor 51 that detects a steering torque Th applied to the steering shaft 12 is connected to the steering control device 1. The torque sensor 51 is disposed on the steering wheel 11 side with respect to a portion of the steering shaft 12 connected to the steering-side actuator 13 (steering-side reducer 15). A right front wheel sensor 52r and a left front wheel sensor 52l are provided on a hub unit 52 that rotatably supports the steered wheels 4 via a drive shaft (not illustrated). The right front wheel sensor 52r and the left front wheel sensor 52l are connected to the steering control device 1. The right front wheel sensor 52r and the left front wheel sensor 52l detect wheel speeds Vr and Vl of the respective steered wheels 4. The steering control device 1 of the present embodiment detects an average value of the wheel speeds Vr and Vl as a vehicle speed V. A yaw rate sensor 53 that detects a yaw rate $\gamma$ of the vehicle and a lateral acceleration sensor 54 that detects a lateral acceleration LA of the vehicle are also connected to the steering control device 1. A steering-side rotation sensor 55 and a turning-side rotation sensor 56 are also connected to the steering control device 1. The steering-side rotation sensor 55 detects, as a detection value indicating a steering amount of the steering unit 3, a rotation angle $\theta s$ of the steering-side motor 14 in terms of a relative angle within 360°. The turning-side rotation sensor 56 detects, as a detection value indicating a turning amount of the turning unit 5, a rotation angle $\theta t$ of the turning-side motor 44. The steering torque Th and the rotation angles $\theta s$ and $\theta t$ are detected as positive values when steering is performed in a first direction (right in the present embodiment), and as negative values when steering is performed in a second direction (left in the present embodiment). The steering control device 1 controls operations of the steering-side motor 14 and the turning-side motor 44 based on these various state quantities.

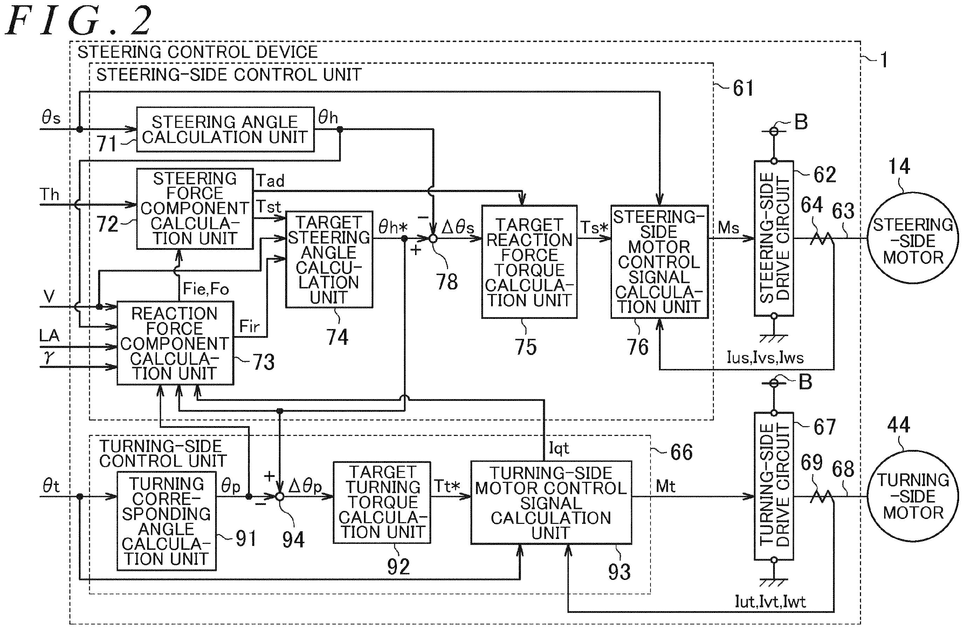

Hereinafter, the configuration of the steering control device 1 will be described in detail. As illustrated in FIG. 2, the steering control device 1 includes a steering-side control unit 61 that outputs a steering-side motor control signal Ms, and a steering-side drive circuit 62 that supplies drive power to the steering-side motor 14 based on the steering-side motor control signal Ms. Current sensors 64 are connected to the steering-side control unit 61. The current sensors 64 detect phase current values Ius, Ivs, and Iws of the steering-side motor 14 flowing through connection lines 63 between the steering-side drive circuit 62 and motor coils of respective phases of the steering-side motor 14. In FIG. 2, the connection lines 63 of respective phases and the current sensors 64 of respective phases are collectively depicted as a single connection line 63 and a single current sensor 64, respectively, for the sake of convenience.

The steering control device 1 includes a turning-side control unit 66 that outputs a turning-side motor control signal Mt, and a turning-side drive circuit 67 that supplies drive power to the turning-side motor 44 based on the turning-side motor control signal Mt. Current sensors 69 are connected to the turning-side control unit 66. The current sensors 69 detect phase current values Iut, Ivt, and Iwt of the turning-side motor 44 flowing through connection lines 68 between the turning-side drive circuit 67 and motor coils of respective phases of the turning-side motor 44. In FIG. 2, the connection lines 68 of respective phases and the current sensors 69 of respective phases are collectively depicted as a single connection line 68 and a single current sensor 69, respectively, for the sake of convenience. Each of the steering-side drive circuit 62 and the turning-side drive circuit 67 of the present embodiment is a known PWM inverter including a plurality of switching elements (such as FETs). Each of the steering-side motor control signal Ms and the turning-side motor control signal Mt is a gate ON/OFF signal that determines the ON/OFF state of each switching element.

The steering-side control unit 61 and the turning-side control unit 66 output the steering-side motor control signal Ms and the turning-side motor control signal Mt to the steering-side drive circuit 62 and the turning-side drive circuit 67, respectively, thereby supplying drive power from the in-vehicle battery B to the steering-side motor 14 and the turning-side motor 44. In this manner, the steering-side control unit 61 and the turning-side control unit 66 control the operations of the steering-side motor 14 and the turning-side motor 44, respectively.

First, the configuration of the steering-side control unit 61 will be described. The steering-side control unit 61 executes calculation processes indicated by respective control blocks described below at prescribed calculation intervals so as to generate the steering-side motor control signal Ms. The steering-side control unit 61 receives the vehicle speed V, the steering torque Th, the yaw rate $\gamma$, the lateral acceleration LA, the rotation angle $\theta$s, and the phase current values Ius, Ivs, and Iws described above, and also receives a turning corresponding angle $\theta$p output from the turning-side control unit 66, and a q-axis current value Iqt as a drive current of the turning-side motor 44 described below. Then, the steering-side control unit 61 generates and outputs the steering-side motor control signal Ms based on these state quantities.

Specifically, the steering-side control unit 61 includes a steering angle calculation unit 71 that calculates a steering angle $\theta$h of the steering wheel 11. The steering-side control unit 61 further includes a steering force component calculation unit 72 that calculates a steering force component Tst as a force that rotates the steering wheel 11 in the same direction as the received steering torque Th, and a reaction force component calculation unit 73 that calculates a reaction force component Fir as a force against rotation of the steering wheel 11. The steering force component Tst is a force applied to the steering system 2 in the same direction as the steering torque Th, and the reaction force component Fir is a force applied to the steering system 2 in the opposite direction to the steering torque Th. The steering-side control unit 61 further includes a target steering angle calculation unit 74 that calculates a target steering angle $\theta$h* representing the target value of the steering angle $\theta$h, a target reaction force torque calculation unit 75 that calculates a target reaction force torque Ts* representing the target value of the steering reaction force, and a steering-side motor control signal calculation unit 76 that outputs the steering-side motor control signal Ms.

The steering angle calculation unit 71 receives the rotation angle $\theta$s of the steering-side motor 14. The steering angle calculation unit 71 converts the received rotation angle $\theta$s into an absolute angle in an angle range including a range over 360° by, for example, counting the number of rotations of the steering-side motor 14 from a steering neutral position. Then, the steering angle calculation unit 71 calculates the steering angle $\theta$h, by multiplying the rotation angle converted into an absolute angle by a conversion factor Ks based on a rotational speed ratio of the steering-side reducer 15. The thus calculated steering angle $\theta$h is output to a subtractor 78 and the reaction force component calculation unit 73.

The steering force component calculation unit 72 receives the steering torque Th, an end reaction force Fie, and an obstacle contact reaction force Fo. Then, the steering force component calculation unit 72 calculates the steering force component Tst based on these state quantities.

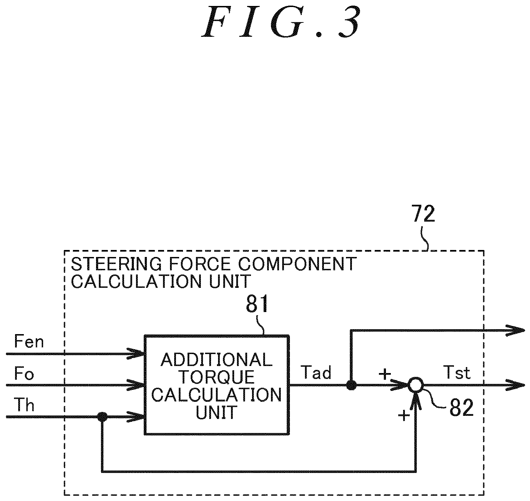

Specifically, as illustrated in FIG. 3, the steering force component calculation unit 72 includes an additional torque calculation unit 81 that calculates an additional torque (basic assist torque) Tad applied in the same direction as the steering torque Th. The additional torque calculation unit 81 receives the steering torque Th. Then, the additional torque calculation unit 81 calculates the additional torque Tad having an absolute value that increases as the absolute value of the steering torque Th increases. The additional torque Tad is calculated so as to exhibit a similar trend to that of an assist force applied in accordance with a received steering torque in an electric power steering system including a motor to assist the driver in steering. The additional torque calculation unit 81 receives the end reaction force Fie and the obstacle contact reaction force Fo, and changes the value of the additional torque Tad based on these forces as will be described below. The thus calculated additional torque Tad is output to an adder 82 and the target reaction force torque calculation unit 75. Then, the steering force component calculation unit 72 calculates the steering force component Tst by causing the adder 82 to add the additional torque Tad and the steering torque Th together. The thus calculated steering force component Tst is input to the target steering angle calculation unit 74.

As illustrated in FIG. 2, the target steering angle calculation unit 74 receives the reaction force component Fir calculated by the reaction force component calculation unit 73 described below, in addition to the vehicle speed V and the steering force component Tst. The target steering angle calculation unit 74 calculates, as an input torque Tin* (= Tb* + Th - Fir), a value obtained by subtracting the reaction force component Fir from the steering force component Tst. Then, the target steering angle calculation unit 74 calculates the target steering angle θh*, using the following model (steering model) formula (1) that associates the input torque Tin* and the target steering angle θh* with each other.

$$Tin^* = C \cdot \theta h^{*\prime} + J \cdot \theta h^{*\prime\prime} \qquad (1)$$

This model formula is an expression that defines the relationship between the torque and rotation angle of a rotary shaft that rotates with rotation of the steering wheel 11 in a steering system in which the steering wheel 11 (steering unit 3) is mechanically coupled to the steered wheels 4 (turning unit 5). This model formula is expressed using a viscosity coefficient C representing a modeled friction in the steering system 2 and an inertia coefficient J representing a modeled inertia in the steering system 2. The viscosity coefficient C and the inertia coefficient J are variably set according to the vehicle speed V. The target steering angle θh* calculated using the model formula is output to the reaction force component calculation unit 73, the subtractor 78, and the turning-side control unit 66.

The target reaction force torque calculation unit 75 receives an angle deviation Δθs calculated by subtracting the steering angle θh from the target steering angle θh* in the subtractor 78, in addition to the additional torque Tad. Then, the target reaction force torque calculation unit 75 calculates a basic reaction force torque as a control amount for performing feedback control to feed back the steering angle θh to the target steering angle θh*, based on the angle deviation Δθs. The basic reaction force torque is a basis for a steering reaction force applied by the steering-side motor 14. The target reaction force torque calculation unit 75 then calculates the target reaction force torque Ts* by adding the additional torque Tad to the basic reaction force torque. Specifically, the target reaction force torque calculation unit 75 calculates, as the basic reaction force torque, the sum of the output values of a proportional element, an integral element, and a differential element to which the angle deviation Δθs is input.

The steering-side motor control signal calculation unit 76 receives the rotation angle θs and the phase current values Ius, Ivs, and Iws, in addition to the target reaction force torque Ts*. The steering-side motor control signal calculation unit 76 of the present embodiment calculates a steering-side q-axis target current value Iqs* on the q-axis in the dq coordinate system, based on the target reaction force torque Ts*. Note that in the present embodiment, a steering-side d-axis target current value Ids* on the d-axis is basically set to zero. Then, the steering-side motor control signal calculation unit 76 performs current feedback control in the dq coordinate system, thereby generating the steering-side motor control signal Ms that is output to the steering-side drive circuit 62.

Specifically, the steering-side motor control signal calculation unit 76 calculates a d-axis current value Ids and a q-axis current value Iqs that are the actual current values of the steering-side motor 14 in the dq coordinate system, by mapping the phase current values Ius, Ivs, and Iws onto the dq coordinates based on the rotation angle θs. Then, to make the d-axis current value Ids follow the steering-side d-axis target current value Ids*, and to make the q-axis current value Iqs follow the steering-side q-axis target current value Iqs*, the steering-side motor control signal calculation unit 76 calculates a target voltage value based on the current deviations on the d-axis and q-axis, and generates the steering-side motor control signal Ms having a duty ratio based on the target voltage value.

The thus calculated steering-side motor control signal Ms is output to the steering-side drive circuit 62. Thus, a drive power corresponding to the steering-side motor control signal Ms is supplied from the steering-side drive circuit 62 to the steering-side motor 14. Then, the steering-side motor 14 applies a steering reaction force based on the target reaction force torque Ts* to the steering wheel 11.

In the following, the turning-side control unit 66 will be described. The turning-side control unit 66 executes calculation processes indicated by respective control blocks described below at prescribed calculation intervals so as to generate the turning-side motor control signal Mt. The turning-side control unit 66 receives the rotation angle θt, the target steering angle θh*, and the phase current values Iut, Ivt, and Iwt of the turning-side motor 44 described above. Then, the turning-side control unit 66 generates and outputs the turning-side motor control signal Mt based on these state quantities.

Specifically, the turning-side control unit 66 includes a turning corresponding angle calculation unit 91 that calculates the turning corresponding angle θp corresponding to a rotation angle (pinion angle) of the first pinion shaft 31. The turning-side control unit 66 further includes a target turning torque calculation unit 92 that calculates a target turning torque Tt* representing the target value of the turning force, and a turning-side motor control signal calculation unit 93 that outputs the turning-side motor control signal Mt. In the steering system 2 of the present embodiment, a steering angle ratio, which is a ratio between the steering angle θh and the turning corresponding angle θp, is set to be constant, and the target turning corresponding angle representing the target value of the turning corresponding angle θp is equal to the target steering angle θh*.

The turning corresponding angle calculation unit 91 receives the rotation angle θt of the turning-side motor 44. The turning corresponding angle calculation unit 91 converts the received rotation angle θt into an absolute angle by, for example, counting the number of rotations of the turning-side motor 44 from a neutral position with which the vehicle travels straight ahead. Then, the turning corresponding angle calculation unit 91 calculates the turning corresponding angle θp, by multiplying the rotation angle converted into an absolute angle by a conversion factor Kt based on a rotational speed ratio of the turning-side reducer 45 and a rotational speed ratio of the first and second rack-and-pinion mechanisms 34 and 42. That is, the turning corresponding angle θp corresponds to the steering angle θh of the steering wheel 11 on the assumption that the first pinion shaft 31 is coupled to the steering shaft 12. The thus calculated turning corresponding angle θp is output to a subtractor 94 and the reaction force component calculation unit 73. The subtractor 94 receives the target steering angle θh* (target turning corresponding angle), in addition to the turning corresponding angle θp.

The target turning torque calculation unit 92 receives an angle deviation Δθp calculated by subtracting the turning corresponding angle θp from the target steering angle θh* (target turning corresponding angle) in the subtractor 94. Then, the target turning torque calculation unit 92 calculates the target turning torque Tt* representing the target value of the turning force that is applied by the turning-side motor 44, as a control amount for performing feedback control to feed back the turning corresponding angle θp to the target steering angle θh*, based on the angle deviation Δθp. Specifically, the target turning torque calculation unit 92 calculates, as the target turning torque Tt*, the sum of the output values of a proportional element, an integral element, and a differential element to which the angle deviation Δθp is input.

The turning-side motor control signal calculation unit 93 receives the rotation angle θt and the phase current values Iut, Ivt, and Iwt, in addition to the target turning torque Tt*. The turning-side motor control signal calculation unit 93 calculates a turning-side q-axis target current value Iqt* on the q-axis in the dq coordinate system, based on the target turning torque Tt*. Note that in the present embodiment, a turning-side d-axis target current value Idt* on the d-axis is basically set to zero. Then, the turning-side motor control signal calculation unit 93 performs current feedback control in the dq coordinate system, thereby generating the turning-side motor control signal Mt that is output to the turning-side drive circuit 67.

Specifically, the turning-side motor control signal calculation unit 93 maps the phase current values Iut, Ivt, and Iwt onto the dq coordinates based on the rotation angle θt, thereby calculating the d-axis current value Idt and the q-axis current value Iqt that are the actual current values of the turning-side motor 44 in the dq coordinate system. Then, to make the d-axis current value Idt follow the turning-side d-axis target current value Idt*, and to make the q-axis current value Iqt follow the turning-side q-axis target current value Iqt*, the turning-side motor control signal calculation unit 93 calculates a target voltage value based on the current deviations on the d-axis and q-axis, and generates the turning-side motor control signal Mt having a duty ratio based on the target voltage value. Note that the q-axis current value Iqt calculated in the course of generating the turning-side motor control signal Mt is output to the reaction force component calculation unit 73.

The thus calculated turning-side motor control signal Mt is output to the turning-side drive circuit 67. Thus, a drive power corresponding to the turning-side motor control signal Mt is supplied from the turning-side drive circuit 67 to the turning-side motor 44. Then, the turning-side motor 44 applies a turning force based on the target turning torque Tt* to the steered wheels 4.

In the following, the configuration of the reaction force component calculation unit 73 will be described. The reaction force component calculation unit 73 receives the vehicle speed V, the steering angle θh, the turning corresponding angle θp, the target steering angle θh*, and the q-axis current value Iqt. The reaction force component calculation unit 73 calculates the reaction force component Fir based on these state quantities, and outputs the reaction force component Fir to the target steering angle calculation unit 74.

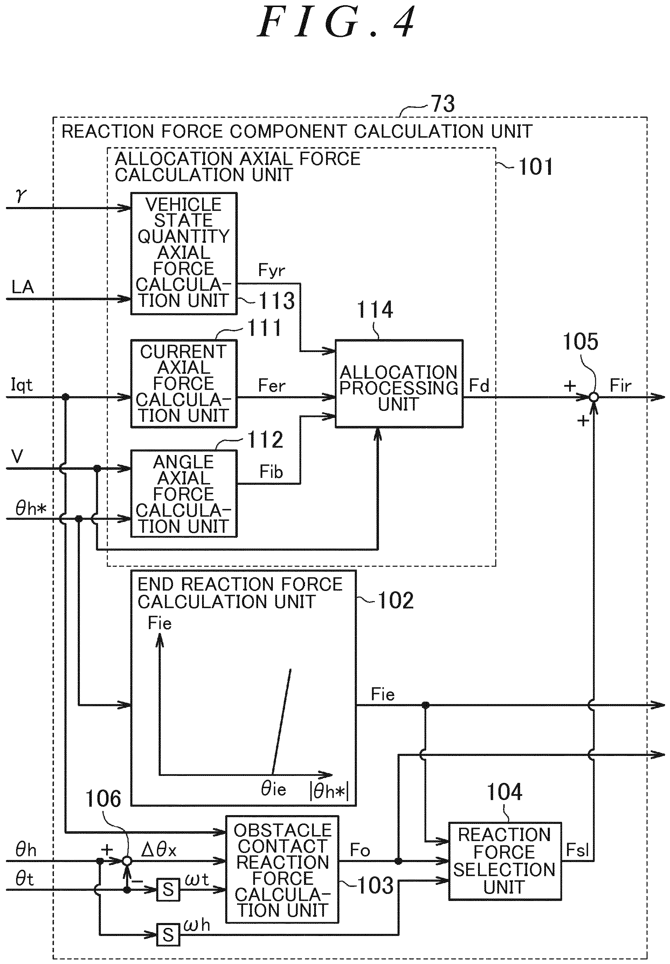

As illustrated in FIG. 4, the reaction force component calculation unit 73 includes an allocation axial force calculation unit 101 serving as an axial force calculation unit, an end reaction force calculation unit 102 serving as a restriction reaction force calculation unit, an obstacle contact reaction force calculation unit 103 serving as the restriction reaction force calculation unit, and a reaction force selection unit 104. The allocation axial force calculation unit 101 calculates an allocation axial force Fd corresponding to the axial force of the rack shaft 32. The end reaction force calculation unit 102 calculates the end reaction force Fie as a restriction reaction force that is a reaction force against further turning of the steering wheel 11, when the absolute value of the steering angle θh of the steering wheel 11 approaches the limit steering angle. The obstacle contact reaction force calculation unit 103 calculates the obstacle contact reaction force Fo as a restriction reaction force that is a reaction force against further turning of the steering wheel 11, when the steered wheel 4 is turned and brought into contact with an obstacle such as a curb. Then, the reaction force component calculation unit 73 outputs, as the reaction force component Fir, a value obtained by adding one of the end reaction force Fie and the obstacle contact reaction force Fo having a greater absolute value to the allocation axial force Fd.

Specifically, the allocation axial force calculation unit 101 includes a current axial force calculation unit 111 that calculates a current axial force (road surface axial force) Fer, an angle axial force calculation unit 112 that calculates an angle axial force (ideal axial force) Fib, and a vehicle state quantity axial force calculation unit 113 that calculates a vehicle state quantity axial force Fyr. Note that the current axial force Fer, the angle axial force Fib, and the vehicle state quantity axial force Fyr are each calculated in the torque dimension (N · m). The reaction force component calculation unit 73 includes an allocation processing unit 114 that calculates the allocation axial force Fd as an axial force, by allocating the angle axial force Fib, the current axial force Fer, and the vehicle state quantity axial force Fyr at a prescribed proportion such that the axial force applied from the road surface to the steered wheels 4 (road surface information transmitted from the road surface) is reflected.

The angle axial force calculation unit 112 receives the vehicle speed V and the target steering angle θh* (target turning corresponding angle). The angle axial force calculation unit 112 calculates the angle axial force Fib to which the road surface information is not reflected, based on the target steering angle θh*. The angle axial force Fib is an ideal value of the axial force applied to the steered wheels 4 (transmitted force that is transmitted to the steered wheels 4). Specifically, the angle axial force calculation unit 112 calculates the angle axial force Fib such that the absolute value of the angle axial force Fib increases as the absolute value of the target steering angle θh* increases. Further, the angle axial force calculation unit 112 calculates the angle axial force Fib such that the absolute value of the angle axial force Fib increases as the vehicle speed V increases. The thus calculated angle axial force Fib is output to the allocation processing unit 114.

The current axial force calculation unit 111 receives the q-axis current value Iqt of the turning-side motor 44. The current axial force calculation unit 111 calculates the current axial force Fer to which the road surface information is reflected, based on the q-axis current value Iqt. The current axial force Fer is an estimated value of the axial force applied to the steered wheels 4 (transmitted force that is transmitted to the steered wheels 4). Specifically, the current axial force calculation unit 111 calculates the current axial force Fer such that the absolute value of the current axial force Fer increases as the absolute value of the q-axis current value Iqt increases, on the assumption that the torque applied to the rack shaft 32 by the turning-side motor 44 balances the torque corresponding to the force applied from the road surface to the steered wheels 4. The thus calculated current axial force Fer is output to the allocation processing unit 114.

The vehicle state quantity axial force calculation unit 113 receives the yaw rate γ and the lateral acceleration LA. The vehicle state quantity axial force calculation unit 113 calculates the vehicle state quantity axial force Fyr using the following expression (2), based on the fact that the lateral force applied to the vehicle can be approximately recognized as the axial force applied to the rack shaft 32.

$$Fyr = Kla \times \text{lateral acceleration LA} + K\gamma \times \gamma' \qquad (2)$$

Note that γ' represents the differential value of the yaw rate γ, and Kla and Kγ represent coefficients that are set in advance through experiments or the like. The thus calculated vehicle state quantity axial force Fyr is output to the allocation processing unit 114.

The allocation processing unit 114 receives the vehicle speed V, the current axial force Fer, the angle axial force Fib, and the vehicle state quantity axial force Fyr. In the allocation processing unit 114, the proportion of the current axial force Fer, the angle axial force Fib, and the vehicle state quantity axial force Fyr is set in advance. Note that in the present embodiment, the proportion is set to vary with the vehicle speed V. The allocation processing unit 114 calculates the allocation axial force Fd, by allocating the current axial force Fer, the angle axial force Fib, and the vehicle state quantity axial force Fyr at a proportion corresponding to the received vehicle speed V. The thus calculated allocation axial force Fd is output to an adder 105.

The end reaction force calculation unit 102 receives the target steering angle θh* (target turning corresponding angle). The end reaction force calculation unit 102 includes a map defining the relationship between the target steering angle θh* and the end reaction force Fie, and calculates the end reaction force Fie corresponding to the target steering angle θh* by referring to the map. A threshold angle θie is set in the map. Thus, when the absolute value of the target steering angle θh* is less than or equal to the threshold angle θie, the end reaction force Fie is calculated to be zero. On the other hand, when the absolute value of the target steering angle θh* is greater than the threshold angle θie, the end reaction force Fie is calculated to be greater than zero. The thus calculated end reaction force Fie is output to the reaction force selection unit 104 and the steering force component calculation unit 72. Note that the end reaction force Fie is set to have an absolute value that is so large that the steering wheel 11 cannot be further turned by human power when the target steering angle θh* exceeds the threshold angle θie and increases to a certain level. That is, in the present embodiment, a situation where the target steering angle θh* exceeds the threshold angle θie is one of the situations where turning of the steered wheels 4 in at least one direction is restricted.

The threshold angle θie is set to the value of the turning corresponding angle θp in a virtual rack end position located on the neutral-position side with respect to the mechanical rack end position where the axial movement of the rack shaft 32 is restricted due to contact of the rack end 35 with the rack housing 33. Also, the threshold angle θie (turning corresponding angle θp in the virtual rack end position) is set to be on the neutral-position side with respect to the steering angle θh of the steering wheel 11 in the steering end position defined by the maximum allowable limit by the spiral cable device 21 in the relationship with the mechanical structure of the steering unit 3 on the assumption that the steering unit 3 is coupled to the turning unit 5. That is, in the steering system 2 of the present embodiment, the virtual rack end position is set as the steering angle limit position of the turning unit 5, and the steering end position is set as the steering angle limit position of the steering unit 3. Assuming that the first pinion shaft 31 is coupled to the steering shaft 12, the turning unit 5 (steered wheels 4) reaches the steering angle limit position first. Further, the threshold angle θie corresponds to a steering angle threshold specified for the steering system 2.

The obstacle contact reaction force calculation unit 103 receives an angle deviation Δθx obtained by subtracting the turning corresponding angle θp from the steering angle θh in a subtractor 106, and a turning speed ωt obtained by differentiating the turning corresponding angle θp, in addition to the q-axis current value Iqt. The obstacle contact reaction force calculation unit 103 of the present embodiment calculates the obstacle contact gain Go representing the degree of approximation with respect to the situation where the obstacle contact reaction force Fo needs to be applied, based on these state quantities, and calculates the obstacle contact reaction force Fo based on the obstacle contact gain Go.

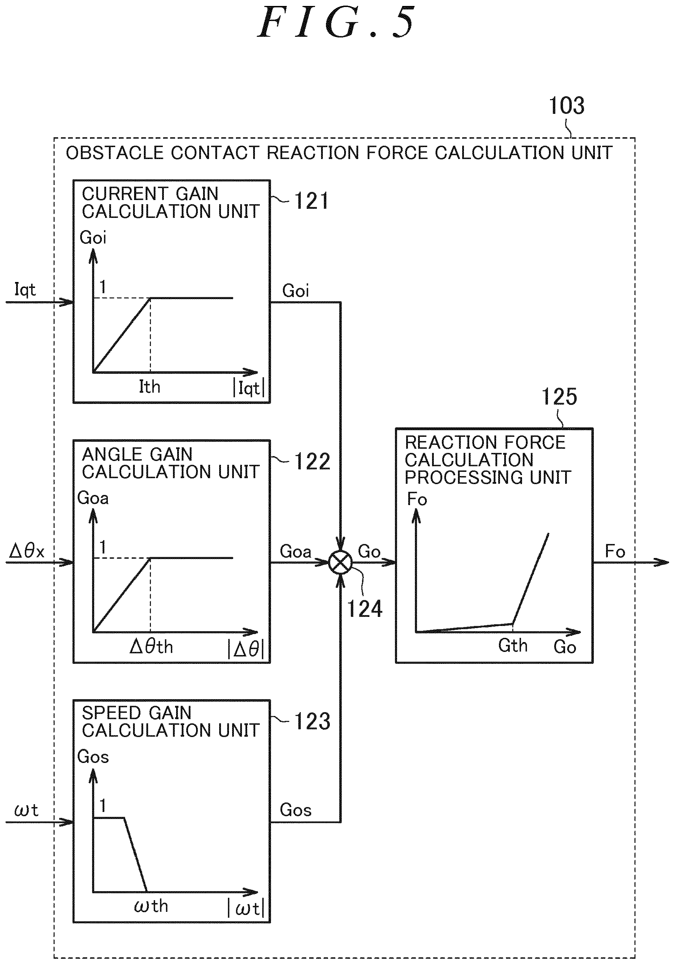

Specifically, as illustrated in FIG. 5, the obstacle contact reaction force calculation unit 103 includes a current gain calculation unit 121 that calculates a current gain Goi based on the q-axis current value Iqt, an angle gain calculation unit 122 that calculates an angle gain Goa based on the angle deviation Δθx, and a speed gain calculation unit 123 that calculates a speed gain Gos based on the turning speed ωt.

The current gain calculation unit 121 receives the q-axis current value Iqt. The current gain calculation unit 121 includes a map defining the relationship between the absolute value of the q-axis current value Iqt and the current gain Goi, and calculates the current gain Goi corresponding to the q-axis current value Iqt by referring to the map. According to this map, the current gain Goi is zero when the absolute value of the q-axis current value Iqt is zero, and the current gain Goi increases in proportion to an increase in the absolute value of the q-axis current value Iqt. Further, when the absolute value of the q-axis current value Iqt exceeds a current threshold Ith, the current gain Goi becomes 1. That is, in the present embodiment, one of the conditions for determining an approximation to the situation where the steered wheel 4 is turned and brought into contact with an obstacle is that an attempt is being made to turn the steered wheels 4. As the absolute value of the q-axis current value Iqt increases, a situation is more approximated to the situation where the steered wheel 4 is turned and brought into contact with an obstacle. Note that the current threshold Ith is a value of a current that enables turning of the steered wheels 4 on a normal road surface when supplied to the turning-side motor 44, and is set in advance through experiments or the like. The thus calculated current gain Goi is input to a multiplier 124.

The angle gain calculation unit 122 receives the angle deviation Δθx. The angle gain calculation unit 122 includes a map defining the relationship between the absolute value of the angle deviation Δθx and the angle gain Goa, and calculates the angle gain Goa corresponding to the angle deviation Δθx by referring to the map. According to this map, the angle gain Goa is zero when the absolute value of the angle deviation Δθx is zero, and the angle gain Goa increases in proportion to an increase in the absolute value of the angle deviation Δθx. Further, when the absolute value of the angle deviation Δθx exceeds the angle deviation threshold Δθth, the angle gain Goa becomes 1. That is, in the present embodiment, one of the conditions for determining an approximation to the situation where the steered wheel 4 is turned and brought into contact with an obstacle is that there is a large deviation between the steering angle θh and the turning corresponding angle θp. As the absolute value of the angle deviation Δθx increases, a situation is more approximated to the situation where the steered wheel 4 is turned and brought into contact with an obstacle. Note that the angle deviation threshold Δθth is an angle with which a determination may be made that there is a deviation between the steering angle θh and the turning corresponding angle θp even when taking into account the noise of sensors or the like, and is set in advance through experiments or the like. The thus calculated angle gain Goa is input to the multiplier 124.

The speed gain calculation unit 123 receives the turning speed ωt. The speed gain calculation unit 123 includes a map defining the relationship between the absolute value of the turning speed ωt and the speed gain Gos, and calculates the speed gain Gos corresponding to the turning speed ωt by referring to the map. According to this map, the speed gain Gos is 1 when the absolute value of the turning speed ωt is zero or at a value near zero, and the speed gain Gos linearly decreases in response to an increase in the absolute value of the turning speed ωt. Further, when the absolute value of the turning speed ωt exceeds the speed threshold ωth, the speed gain Gos becomes zero. That is, in the present embodiment, one of the conditions for determining an approximation to the situation where the steered wheel 4 is turned and brought into contact with an obstacle is that the turning speed ωt is low. As the absolute value of the turning speed ωt decreases, a situation is more approximated to the situation where the steered wheel 4 is turned and brought into contact with an obstacle. Note that the speed threshold ωth is a speed with which a determination may be made that the steered wheels 4 are turned even when taking into account the noise of sensors or the like, and is set in advance through experiments or the like. The thus calculated speed gain Gos is input to the multiplier 124.

The obstacle contact reaction force calculation unit 103 causes the multiplier 124 to multiply together the current gain Goi, the angle gain Goa, and the speed gain Gos, thereby calculating the obstacle contact gain Go representing the degree of approximation with respect to the situation where the obstacle contact reaction force Fo needs to be applied. The thus calculated obstacle contact gain Go is output to a reaction force calculation processing unit 125.

The reaction force calculation processing unit 125 includes a map defining the relationship between the obstacle contact gain Go and the obstacle contact reaction force Fo, and calculates the obstacle contact reaction force Fo corresponding to the obstacle contact gain Go by referring to the map. According to this map, the obstacle contact reaction force Fo is zero when the obstacle contact gain Go is zero, and the obstacle contact reaction force Fo gradually increases in proportion to an increase in the obstacle contact gain Go. Further, when the obstacle contact gain Go exceeds a gain threshold Gth, the obstacle contact reaction force Fo rapidly increases in proportion to an increase in the obstacle contact gain Go. Note that the gain threshold Gth is the magnitude of gain with which a determination may be made that the steered wheel 4 is turned and brought into contact with an obstacle, and is set in advance through experiments or the like. Note that the obstacle contact reaction force Fo is set to have an absolute value that becomes so large that the steering wheel 11 cannot be further turned by human power when the obstacle contact gain Go exceeds the gain threshold Gth and increases to a certain level. That is, in the present embodiment, a situation where the obstacle contact gain Go exceeds the gain threshold Gth is another one of the situations where turning of the steered wheels 4 in at least one direction is restricted. Thus, in the range where the obstacle contact gain Go is less than or equal to the gain threshold Gth, a reaction force that is generated when only a tire (rubber) portion of the steered wheel 4 is brought into contact with an obstacle is reproduced by the obstacle contact reaction force Fo. Meanwhile, in the range where the obstacle contact gain Go is greater than the gain threshold Gth, a reaction force that is generated when a wheel portion of the steered wheel 4 is brought into contact with an obstacle is reproduced by the obstacle contact reaction force Fo. The thus calculated obstacle contact reaction force Fo is output to the reaction force selection unit 104 (see FIG. 4) and the steering force component calculation unit 72 (see FIG. 2).

As illustrated in FIG. 4, the reaction force selection unit 104 receives a steering speed ωh obtained by differentiating the steering angle θh, in addition to the end reaction force Fie and the obstacle contact reaction force Fo. The reaction force selection unit 104 selects one of the end reaction force Fie and the obstacle contact reaction force Fo having a greater absolute value, sets the sign (direction) of the selected reaction force to the same sign as the steering speed ωh, and outputs the resulting value as a selected reaction force Fsl to the adder 105. Then, the reaction force component calculation unit 73 causes the adder 105 to add the selected reaction force Fsl to the allocation axial force Fd to calculate the reaction force component Fir, and outputs the reaction force component Fir to the target steering angle calculation unit 74 (see FIG. 2).

The following describes changing of the steering force component Tst by the steering force component calculation unit 72.

Referring back to FIG. 3, when turning of the steered wheels 4 in at least one direction is restricted, the steering force component calculation unit 72 of the present embodiment makes the absolute value of the steering force component Tst smaller compared to when turning of the steered wheels 4 is not restricted.

Specifically, the additional torque calculation unit 81 receives the end reaction force Fie and the obstacle contact reaction force Fo, in addition to the steering torque Th. The additional torque calculation unit 81 determines whether at least one of the end reaction force Fie and the obstacle contact reaction force Fo is greater than a prescribed reaction force Fth that is set in advance. Note that the prescribed reaction force Fth is set to a value greater than the value of the obstacle contact reaction force Fo when the value of the obstacle contact gain Go is equal to the gain threshold Gth. Then, when at least one of the end reaction force Fie and the obstacle contact reaction force Fo is greater than the prescribed reaction force Fth, the additional torque calculation unit 81 changes the calculated additional torque Tad calculated based on the steering torque Th to zero, and outputs the additional torque Tad to the adder 82 and the target steering angle calculation unit 74. On the other hand, when both the end reaction force Fie and the obstacle contact reaction force Fo are less than or equal to the prescribed reaction force Fth, the additional torque calculation unit 81 simply outputs the additional torque Tad calculated based on the steering torque Th to the adder 82 and the target steering angle calculation unit 74.

The advantageous effects of the present embodiment will be described below.

(1) When turning of the steered wheels 4 in at least one direction is restricted, the absolute value of the steering force component Tst is made smaller compared to when turning of the steered wheels 4 is not restricted. Therefore, it is possible to minimize the risk that the steering force component Tst prevents an increase in target reaction force torque Ts* in response to an increase in the reaction force component Fir resulting from addition of the end reaction force Fie or the obstacle contact reaction force Fo. Accordingly, when turning of the steered wheels 4 in at least one direction is restricted, it is possible to reliably restrict steering by applying an appropriate steering reaction force.
(2) When turning of the steered wheels 4 in at least one direction is restricted, the additional torque calculation unit 81 sets the additional torque Tad to zero. Therefore, it is possible to appropriately minimize an increase in steering force component Tst.

Hereinafter, a steering control device according to a second embodiment will be described with reference to the drawings. Elements identical to those in the first embodiment are indicated with the same reference numerals and not further described.

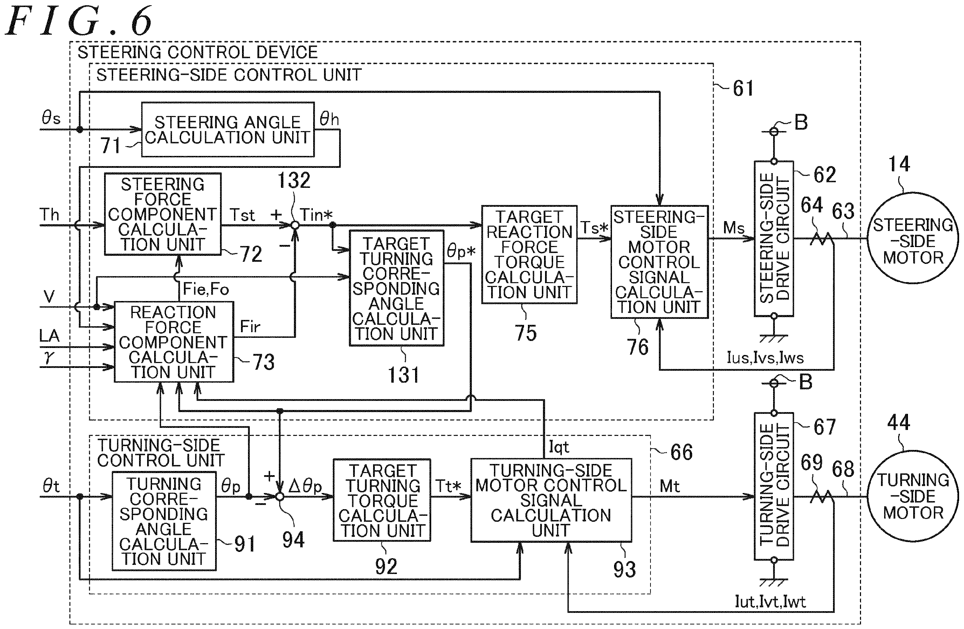

As illustrated in FIG. 6, a steering-side control unit 61 of the present embodiment includes a target turning corresponding angle calculation unit 131 that calculates a target turning corresponding angle $\theta p^*$ representing a target value of the turning corresponding angle $\theta p$ that can be converted into a steered angle of the steered wheels 4, in place of the target steering angle calculation unit 74.

The steering-side control unit 61 includes a subtractor 132 that receives the steering force component Tst and the reaction force component Fir. The steering-side control unit 61 causes the subtractor 132 to subtract the reaction force component Fir from the steering force component Tst, thereby calculating the input torque Tin*. The thus calculated input torque Tin* is output to the target reaction force torque calculation unit 75 and the target turning corresponding angle calculation unit 131.

The target reaction force torque calculation unit 75 of the present embodiment calculates the target reaction force torque Ts* representing the target value of the steering reaction force that is applied by the steering-side motor 14 based on the input torque Tin*. Specifically, the target reaction force torque calculation unit 75 calculates the target reaction force torque Ts* having an absolute value that increases as the input torque Tin* increases.

The target turning corresponding angle calculation unit 131 receives the input torque Tin* and the vehicle speed V. The target turning corresponding angle calculation unit 131 calculates the target turning corresponding angle $\theta p^*$ by performing a calculation process similar to the calculation process that is performed when the target steering angle calculation unit 74 of the first embodiment calculates the target steering angle $\theta h^*$. The thus calculated target turning corresponding angle $\theta p^*$ is a value equivalent to the target steering angle $\theta h^*$ of the first embodiment, and is output to the turning-side control unit 66 and the reaction force component calculation unit 73.

As in the first embodiment described above, the reaction force component calculation unit 73 calculates the reaction force component Fir, and outputs the end reaction force Fie and the obstacle contact reaction force Fo obtained in the course of calculating the reaction force component Fir to the steering force component calculation unit 72. Then, when turning of the steered wheels 4 in at least one direction is restricted, the additional torque calculation unit 81 (see FIG. 3) of the steering force component calculation unit 72 makes the absolute value of the additional torque Tad smaller compared to when turning of the steered wheels 4 in at least one direction is not restricted. In this way, the present embodiment provides advantageous effects similar to the advantageous effects (1) and (2) of the first embodiment.

The above embodiments may be modified as described below. The embodiments and the following modifications may be combined as long as no technical inconsistency arises.

In the above embodiments, the additional torque calculation unit 81 may calculate the additional torque Tad taking into account the state quantities other than the steering torque Th. For example, the additional torque calculation unit 81 may calculate the additional torque Tad such that its absolute value increases as the vehicle speed V decreases.

In the above embodiments, the steering force component calculation unit 72 may include a correction amount calculation unit that calculates a correction amount for correcting the value of the additional torque Tad, other than the additional torque calculation unit 81. In this case, when turning of the steered wheels 4 in at least one direction is restricted, the correction amount may be reduced if the correction amount is a component in the same direction as the steering torque Th, and may be unchanged if the correction amount is a component in the opposite direction.

In the above embodiments, the additional torque Tad is set to zero when turning of the steered wheels 4 in at least one direction is restricted. However, the present invention is not limited thereto. When turning of the steered wheels 4 in at least one direction is restricted, the absolute value of the steering force component Tad may be set to a value greater than zero as long as the absolute value of the steering force component Tst is smaller compared to when turning of the steered wheels 4 is not restricted. Alternatively, when turning of the steered wheels 4 in at least one direction is restricted, the absolute value of the steering force component Tst may be made smaller compared to when turning of the steered wheels 4 is not restricted, by multiplying the steering force component Tst by a gain less than 1, without changing the additional torque Tad, for example.

In the above embodiments, the form of the map of the end reaction force calculation unit 102 may be appropriately changed. For example, the form of the map may be changed such that when the target steering angle $\theta h^*$ is less than or equal to the threshold angle $\theta ie$, the end reaction force Fie gradually increases as the target steering angle $\theta h^*$ increases, and when the target steering angle $\theta h^*$ exceeds the threshold angle $\theta ie$, the end reaction force Fie rapidly increases in proportion to an increase in the target steering angle $\theta h^*$. Similarly, the form of the map of the reaction force calculation processing unit 125 may be appropriately changed. For example, the form of the map may be changed such that when the obstacle contact gain Go is less than or equal to the gain threshold Gth, the obstacle contact reaction force Fo is set to zero. It is obvious that the value of the prescribed reaction force Fth may be appropriately changed in accordance with the form of these maps.

In the above embodiments, the reaction force component calculation unit 73 may include only either one of the end reaction force calculation unit 102 and the obstacle contact reaction force calculation unit 103. The reaction force component calculation unit 73 may use a restriction reaction force calculation unit that calculates other restriction reaction forces. Other restriction reaction forces may include a reaction force that is applied when the voltage of the in-vehicle battery B decreases and therefore the turning-side motor 44 cannot apply a sufficient turning force.

In the above embodiments, the proportion of the current axial force Fer, the angle axial force Fib, and the vehicle state quantity axial force Fyr in the allocation axial force Fd may be constant regardless of the vehicle speed V. Alternatively, the proportion may be changed in accordance with a state quantity other than the vehicle speed V, such as the drive mode indicating the setting status of a control pattern for an in-vehicle engine or the like.

In the above embodiments, the allocation axial force Fd is calculated based on the current axial force Fer, the angle axial force Fib, and the vehicle state quantity axial force Fyr. However, the present invention is not limited thereto. The axial forces based on other state quantities may be used in addition to or in place of these axial forces. Examples of axial forces based on other state quantities may include an axial force based on a value detected by an axial force sensor that detects the axial force of the rack shaft 32, and an axial force based on a tire force detected by the hub unit 52.

In the above embodiment, the reaction force component Fir is based on the allocation axial force Fd. However, the present invention is not limited thereto. The reaction force component may be based on a single axial force (for example, current axial force Fer). In the above embodiments, the steering force component calculation unit 72 determines whether turning of the steered wheels 4 in at least one direction is restricted based on the end reaction force Fie and the obstacle contact reaction force Fo. However, the present invention is not limited thereto. For example, the steering force component calculation unit 72 may determine whether turning of the steered wheels 4 in at least one direction is restricted based on the selected reaction force Fsl. Alternatively, the steering force component calculation unit 72 may determine that the turning of the steered wheels 4 in at least one direction is restricted, for example, when the target steering angle θh* exceeds the threshold angle θie, or when the obstacle contact gain Go exceeds the gain threshold Gth. That is, the method of determining whether the turning of the steered wheels 4 in at least one direction is restricted may be appropriately changed.

In the above embodiments, the steering angle ratio between the steering angle θh and the turning corresponding angle θp is constant. However, the present invention is not limited thereto. The steering angle ratio may vary with the vehicle speed or the like. In this case, the target steering angle θh* and the target turning corresponding angle have different values.

In the above embodiments, the angle axial force Fib is calculated based on the target steering angle θh* (target turning corresponding angle). However, the present invention is not limited thereto. For example, the angle axial force Fib may be calculated based on the steering angle θh, or may be calculated using other methods, such as methods that take into account other parameters such as the steering torque Th and the vehicle speed V.

In the above embodiments, the target steering angle calculation unit 74 may calculate the target steering angle θh* without using the vehicle speed V. In the above embodiments, the target steering angle calculation unit 74 may calculate the target steering angle θh* using a model formula based on a model that additionally includes a so-called spring term and uses a spring constant K determined by specifications of a suspension and wheel alignment.

In the above embodiments, the target reaction force torque calculation unit 75 calculates the target reaction force torque Ts* by adding the additional torque Tad to the basic reaction force torque. However, the present invention is not limited thereto. For example, the target reaction force torque calculation unit 75 may simply output the basic reaction force torque as the target reaction force torque Ts*, without adding the additional torque Tad.

In the above embodiments, the rack shaft 32 may be supported by, for example, a bush in place of the first rack-and-pinion mechanism 34. In the above embodiments, the turning-side actuator 43 may be, for example, one in which the turning-side motor 44 is arranged coaxially with the rack shaft 32, or one in which the turning-side motor 44 is arranged parallel to the rack shaft 32.

In the above embodiments, the steering system 2 controlled by the steering control device 1 is a link-less steer-by-wire steering system in which power transmission is disconnected between the steering unit 3 and the turning unit 5. However, the present invention is not limited thereto. The steering system 2 may be a steer-by-wire system in which power transmission can be connected and disconnected between the steering unit 3 and the turning unit 5 by a clutch.

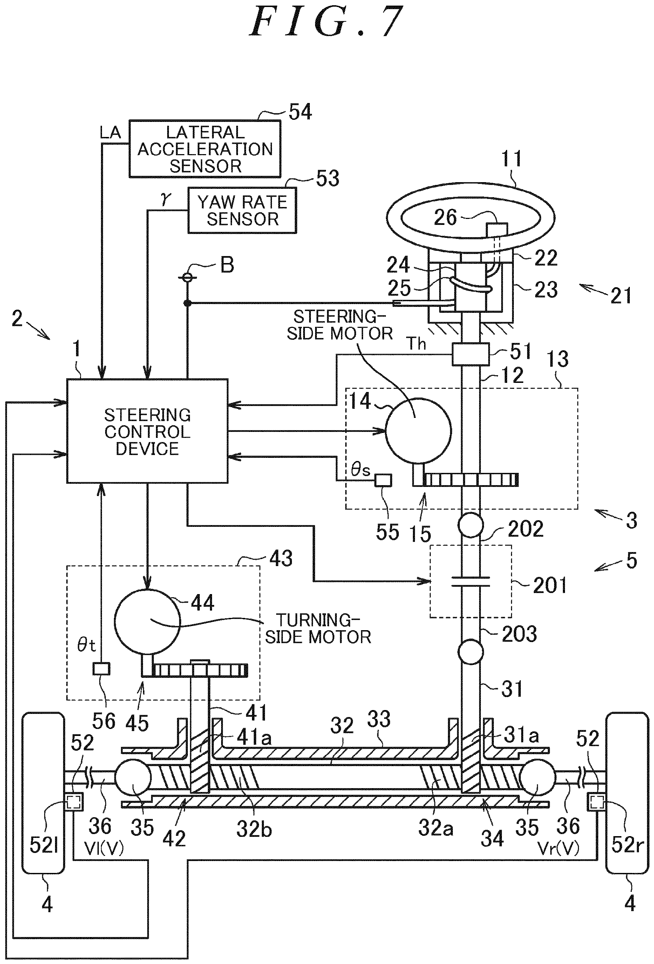

For example, in the example illustrated in FIG. 7, a clutch 201 is disposed between the steering unit 3 and the turning unit 5. The clutch 201 is coupled to the steering shaft 12 through an input-side intermediate shaft 202 fixed to its input-side element, and is coupled to the first pinion shaft 31 through an output-side intermediate shaft 203 fixed to its output-side element. When the clutch 201 is disconnected in response to a control signal from the steering control device 1, the steering system 2 is put into a steer-by-wire mode. Meanwhile, when the clutch 201 is engaged, the steering system 2 is put into an electric power steering mode.

**Claims**

1. A steering control device that controls a steering system configured such that power transmission is disconnected between a steering unit and a turning unit that turns steered wheels in accordance with a steering force input to the steering unit, the steering control device comprising:
a steering-side control unit that controls an operation of a steering-side motor that applies a steering reaction force, the steering reaction force being a force against the steering force input to the steering unit; wherein:

   the steering-side control unit includes

      a steering force component calculation unit that calculates a steering force component that is a force applied in a same direction as a steering torque input to the steering system, and
      a reaction force component calculation unit that calculates a reaction force component that is a force applied to the steering system in an opposite direction to the steering torque;

   the steering-side control unit calculates a target reaction force torque representing a target value of the steering reaction force, based on the steering force component and the reaction force component;
   the reaction force component calculation unit includes a restriction reaction force calculation unit that calculates a restriction reaction force for restricting steering that turns the steered wheels in at least one direction when turning of the steered wheels in at least one direction is restricted; and
   when turning of the steered wheels in at least one direction is restricted, the steering force component calculation unit makes an absolute value of the steering force component smaller compared to when turning of the steered wheels is not restricted.

2. The steering control device according to claim 1, wherein:

   the steering force component calculation unit includes an additional torque calculation unit that calculates an additional torque applied in the same direction based on the steering torque; and
   the additional torque calculation unit sets an absolute value of the additional torque to zero when steering of the steered wheels in at least one direction is restricted.

3. The steering control device according to claim 1 or 2, wherein the restriction reaction force calculation unit includes an end reaction force calculation unit that calculates an end reaction force as the restriction reaction force when a steering angle of a steering wheel coupled to the steering unit exceeds a steering angle threshold specified for the steering system.

4. The steering control device according to any one of claims 1 to 3, wherein the restriction reaction force calculation unit includes an obstacle contact reaction force calculation unit that calculates an obstacle contact reaction force as the restriction reaction force when at least one of the steered wheels is turned and brought into contact with an obstacle.

5. The steering control device according to claim 1 or 2, wherein the steering force component calculation unit calculates the steering force component, based on the steering torque and the additional torque.

6. The steering control device according to claim 1 or 2, wherein the reaction force component calculation unit includes an axial force calculation unit that calculates an axial force applied to a steered shaft with the steered wheels coupled thereto in the opposite direction, and calculates the reaction force component, based on the axial force and the restriction reaction force.

# *FIG.1*

# FIG. 2

STEERING CONTROL DEVICE 1

STEERING-SIDE CONTROL UNIT 61

$\theta s$ → 71 STEERING ANGLE CALCULATION UNIT → $\theta h$

Th → 72 STEERING FORCE COMPONENT CALCULATION UNIT → Tad, Tst

73 REACTION FORCE COMPONENT CALCULATION UNIT

V, LA, $\gamma$ → Fie, Fo, Fir

74 TARGET STEERING ANGLE CALCULATION UNIT → $\theta h*$

78 → $\Delta\theta s$

75 TARGET REACTION FORCE TORQUE CALCULATION UNIT → Ts*

76 STEERING-SIDE MOTOR CONTROL SIGNAL CALCULATION UNIT → Ms

62 STEERING-SIDE DRIVE CIRCUIT 64 63 → STEERING-SIDE MOTOR 14

B

Ius, Ivs, Iws

TURNING-SIDE CONTROL UNIT 66

$\theta t$ → 91 TURNING CORRESPONDING ANGLE CALCULATION UNIT → $\theta p$

94 → $\Delta\theta p$

92 TARGET TURNING TORQUE CALCULATION UNIT → Tt*

93 TURNING-SIDE MOTOR CONTROL SIGNAL CALCULATION UNIT → Mt

Iqt

67 TURNING-SIDE DRIVE CIRCUIT 69 68 → TURNING-SIDE MOTOR 44

B

Iut, Ivt, Iwt

EP 3 647 159 A1

# FIG.3

STEERING FORCE COMPONENT
CALCULATION UNIT

72

81

Fen

Fo

Th

ADDITIONAL
TORQUE
CALCULATION
UNIT

Tad

Tst

82

# *FIG. 4*

# FIG.5

# F I G. 6

STEERING CONTROL DEVICE
STEERING-SIDE CONTROL UNIT

(Figure 6 — a block diagram of a steering control device, showing the STEERING-SIDE MOTOR (14) and TURNING-SIDE MOTOR (44) connected through the STEERING-SIDE DRIVE CIRCUIT (62) and TURNING-SIDE DRIVE CIRCUIT (67) to the steering control unit (61). The steering-side control unit includes: STEERING ANGLE CALCULATION UNIT (71), STEERING FORCE COMPONENT CALCULATION UNIT (72), REACTION FORCE COMPONENT CALCULATION UNIT (73), TARGET REACTION FORCE TORQUE CALCULATION UNIT (75), STEERING-SIDE MOTOR CONTROL SIGNAL CALCULATION UNIT (76), TARGET TURNING CORRESPONDING ANGLE CALCULATION UNIT (131), and related nodes (132). The turning-side control unit (66) includes: TURNING CORRESPONDING ANGLE CALCULATION UNIT (91), TARGET TURNING TORQUE CALCULATION UNIT (92), TURNING-SIDE MOTOR CONTROL SIGNAL CALCULATION UNIT (93), and node (94). Signals shown: $\theta s$, $\theta h$, Th, V, LA, $\gamma$, $\theta t$, $T_{st}$, $T_{in}^*$, $\theta_p^*$, $T_s^*$, Ms, Fie,Fo, Fir, Iqt, $\theta_p$, $\Delta\theta_p$, $T_t^*$, Mt, B, Ius,Ivs,Iws, Iut,Ivt,Iwt, and reference numbers 63, 64, 68, 69.)

# FIG.7

Europäisches
Patentamt

European
Patent Office

Office européen
des brevets

**EUROPEAN SEARCH REPORT**

Application Number

EP 19 20 5636

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 219 580 A1 (JTEKT CORP [JP]) 20 September 2017 (2017-09-20) * paragraphs [0023] - [0055]; figures 1-4 * & JP 2017 165219 A (JTEKT CORP) 21 September 2017 (2017-09-21) ----- | 1 | INV. B62D6/00 |

TECHNICAL FIELDS
SEARCHED      (IPC)

B62D

The present search report has been drawn up for all claims

| Place of search | Date of completion of the search | Examiner |
|---|---|---|
| The Hague | 13 March 2020 | Kulozik, Ehrenfried |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...........................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 20 5636

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2020

| Patent document cited in search report | | Publication date | Patent family member(s) | | Publication date |
|---|---|---|---|---|---|
| EP 3219580 | A1 | 20-09-2017 | CN | 107187493 A | 22-09-2017 |
| | | | EP | 3219580 A1 | 20-09-2017 |
| | | | JP | 2017165219 A | 21-09-2017 |
| | | | US | 2017267276 A1 | 21-09-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017165219 A